# EUROPEAN PATENT APPLICATION

(11) **EP 1 775 881 A1**
(43) Date of publication of application: **18.04.2007**
(21) Application number: 05765502.9
(22) Date of filing: 05.07.2005
(51) Int. Cl.: H04L 9/32

(54) **DATA MANAGEMENT METHOD, PROGRAM THEREOF, AND PROGRAM RECORDING MEDIUM**

(30) Priority: 05.07.2004 JP 2004197494
(71) Applicant: Science Park Corporation, Zama-shi, Kanagawa 228-0024 (JP)
(72) Inventor: SHOJI, Koichiro, c/o SCIENCE PARK CORPORATION, Zama-shi, Kanagawa 2280024 (JP); NOZAKI, Takashi, c/o SCIENCE PARK CORPORATION, Zama-shi, Kanagawa 2280024 (JP)
(74) Representative: TER MEER - STEINMEISTER & PARTNER GbR
(86) International application number: PCT/JP2005/012427
(87) International publication number: WO 2006/004130

(57) **Abstract**

Recording is restricted when user data or a program stored in an electronic computer is going to be carried to the outside by being recorded to an electronic recording medium with a recording device connected to the computer.

A data management program stored in the computer has the function of restricting writing of data to the recording medium from the computer so that only a user authenticated by user authentication is enabled to perform the writing. The data management program authenticates whether or not the user is an authorized one by using a USB memory storing a secret key for authentication.

## Description

### Technical Field:

The present invention relates to a data management method for managing data stored in an electronic computer, and also relates to a program for the method and a recording medium for the program. More particularly, the present invention relates to a data management method for controlling a recording operation when electronic data is to be recorded to a recording medium with a recording device connected to an electronic computer. The present invention also relates to a program for the method and a recording medium for the program.
Even more particularly, the present invention relates to a data management method for managing data, files, etc. that could leak from an electronic computer to the outside thereof. The present invention also relates to a program for the method and a recording medium for the program.

### Background Art:

Data stored in a hard disk (HDD) of an electronic computer may be recorded and carried away in an electronic recording medium such as an FD (registered trademark), an MO, a CD, or a flash memory. The data may contain important information such as corporate confidential information and personal information. It is important from the viewpoint of security that such data be protected from leaking to the outside.

When data stored in an HDD of an electronic computer is to be carried to the outside, it is common practice to write the data to a medium such as an FD, a CD, a DVD, an MO, a flash memory, or an external removable HDD. Data can also be written to a storage device such as a card-type memory device employing a flash memory or an external removable HDD. Examples of card-type memory devices employing a flash memory are Memory Stick (registered trademark), Compact Flash (registered trademark), Smart Media (registered trademark), and SD Memory (registered trademark).

A recording device for recording electronic data to such storage devices and media is connected to the electronic computer to perform writing. The storage device and the recording device are connected to the electronic computer through an interface such as a USB (Universal Serial Bus), IEEE1394, SCSI, PCMCIA, or CF to perform data transmission and reception, thereby writing the data. Under these circumstances, restrictions may be imposed on the use of devices that can write to recordable media to prevent leakage of data to the outside. That is, devices capable of writing are removed from the electronic computer, and connection of these devices to the electronic computer is restricted.

It is also common practice to store and manage a history of operating the electronic computer. The stored history may be analyzed to grasp when data was accessed and how it was written, for example, thereby performing data management. In addition, the functions of operating systems (OS's) running on electronic computers include a method of imposing restrictions so that data cannot be written to an electronic recording medium. UNIX. (registered trademark) and LINUX OS's can control so that the user's access right is enabled or disabled, but it is difficult with Windows (registered trademark) OS's to implement such control.

OS instruction operation modes are roughly divided into a user mode and a kernel mode. In the kernel mode, programs running in the kernel mode can execute all instructions provided by the OS. In the user mode, application programs running in the user mode can execute only a part of the instructions provided by the OS. That is, the user mode provides a limited environment. Thus, a stable operation of the electronic computer is provided by limiting the executable instructions in the user mode.

The control of input/output devices of the electronic computer is effected by a device driver associated with each input/output device. Device drivers run in the kernel mode. The programs of the device drivers can be modified or renewed by a user. A small error or problem in a device driver program may, however, cause an unstable operation of the electronic computer. Therefore, there are almost no cases where ordinary skilled persons assemble programs at the device driver level.

Patent Document 1 discloses a common interface driver that provides a common interface between a device driver and an application program. The common interface driver also provides a common interface between a plurality of device drivers.
Patent Document 1 provides a common interface between a device driver and an application program and between a plurality of device drivers but does not control a data recording operation to a recording device by a device driver. Patent Document 1: Japanese Patent Application Unexamined Publication (KOKAI) No. 2002-328878

### Disclosure of the Invention:

### Problem to be Solved by the Invention:

With the above-described technical background, the present invention has been made to attain the following objects.
An object of the present invention is to provide a data management method that controls a recording operation of recording data, a program or the like to a recording medium with a recording device connected to an electronic computer, and also provide a program for the method and a recording medium for the program.

Another object of the present invention is to provide a data management method that performs license authentication to enable only an authorized user to perform a recording operation when data, a program or the like is to be recorded to an electronic recording medium with a recording device connected to an electronic computer, and also provide a program for the method and a recording medium for the program.

### Means for Solving the Problem:

To attain the above-described objects, the present invention adopts the following means.
According to a first aspect thereof, the present invention provides a data management method for use with an electronic computer that is connected with at least one recording device for writing to a recording medium at least one electronic data selected from the group consisting of user data and programs and that is running under control of an operating system. When a user operates the electronic computer or an application program running on the electronic computer to execute writing of the electronic data to the recording medium with the recording device to duplicate or move the electronic data, the data management method controls the writing by enabling or disabling it.

The data management method according to the first aspect of the present invention is characterized in that authentication of the user is performed by using first authentication data stored in the electronic computer and second authentication data stored in memory means connected to the electronic computer, and if the user authentication is successful, the writing is enabled, whereas if it is not successful, the writing is disabled by a data management program that runs on the electronic computer and that controls so that only a user authenticated by user authentication is enabled to perform the writing.

A data management method according to a second aspect of the present invention is characterized as follows. The data management program in the data management method according to the first aspect of the present invention comprises a common interface program that provides a common interface for transmission and reception of data between a plurality of device drivers of the electronic computer or between the application program and the device drivers and that controls a recording device-controlling device driver that directly controls the recording device to enable or disable an operation for performing the writing, thereby controlling the writing. The data management program further comprises an authentication module program that communicates with the memory means to perform the user authentication.

The data management method according to the second aspect of the present invention is further characterized in that when the electronic computer or the application program is to execute the writing, the common interface program requests the authentication module program to perform the user authentication. The authentication module program calls an authentication application program for performing the authentication, instructs it to perform the user authentication by using the first authentication data and the second authentication data, and passes the result of the user authentication to the common interface program. The common interface program receives the result and enables the writing if the authentication is successful, but disables the writing if the authentication is not successful.

A data management method according to a third aspect of the present invention is characterized as follows. In the data management method according to the first or second aspect of the present invention, when the electronic computer or the application program is to execute the writing, the authentication module program performs the user authentication by using the authentication data when the memory means is either connected to the electronic computer or inserted into a drive for the memory means and a specific key of an input device of the electronic computer is pressed. Thereafter, the authentication module program connects the electronic computer to a server through a network, acquires new second authentication data from a database stored in the server and having authentication data consisting essentially of the first authentication data and the second authentication data for use in the user authentication, and stores the new second authentication data in the memory means. A management program stored in the server to perform management of the authentication data updates and registers the second authentication data used in the user authentication and the new second authentication data in the database.

A data management method according to a fourth aspect of the present invention is characterized as follows. In the data management method according to any one of the first to third aspects of the present invention, when data management is performed for a plurality of electronic computers by using the memory means, at least one item of the first authentication data is stored in each of the electronic computers, and all the second authentication data pairing with the first authentication data stored in each of the electronic computers is stored in the memory means.

A data management method according to a fifth aspect of the present invention is characterized as follows. In the data management method according to any one of the second to fourth aspects of the present invention, an algorithm used in the user authentication is a public-key algorithm. A public key and a secret key assigned to each user are prepared in a pair. The first authentication data comprises the public key, and the second authentication data comprises the secret key.

A data management method according to a sixth aspect of the present invention is characterized as follows. In the data management method according to any one of the second to fourth aspects of the present invention, an algorithm used in the user authentication is a public-key algorithm. A public key and a secret key assigned to each user are prepared in a pair. The first authentication data comprises the secret key, and the second authentication data comprises the public key.

A data management method according to a seventh aspect of the present invention is characterized as follows. In the data management method according to any one of the second to fourth aspects of the present invention, the memory means comprises a removable disk and a removable disk device for writing and reading the electronic data to and from the removable disk.

A data management method according to an eighth aspect of the present invention is characterized as follows. In the data management method according to any one of the second to fourth aspects of the present invention, the memory means comprises a flash memory, or a random access memory card.

A data management method according to a ninth aspect of the present invention is characterized as follows. In the data management method according to any one of the first to fourth aspects of the present invention, the memory means is a USB (Universal Serial Bus) memory, or a flexible disk.

A data management program according to a tenth aspect of the present invention is for use with an electronic computer that is connected with at least one recording device for writing to a recording medium at least one electronic data selected from the group consisting of user data and programs and that is running under control of an operating system. When a user operates the electronic computer or an application program running on the electronic computer to make a write request for writing the electronic data to the recording medium, the electronic computer is instructed to execute a write step of writing the electronic data to the recording medium with the recording device in response to the write request to thereby duplicate or move the electronic data. When the write step is to be executed, the data management program instructs the electronic computer to execute a control step of controlling the write step by enabling or disabling the execution of the write step.

The data management program according to the tenth aspect of the present invention is further characterized as follows. The control step includes a first read step of reading first authentication data stored in the electronic computer, a second read step of reading second authentication data stored in memory means connected to the electronic computer and having a memory area used for user authentication, an authentication step of performing the user authentication by using the first authentication data and the second authentication data, an enable step of enabling execution of the write step if the user authentication step is successful, and a disable step of disabling execution of the write step if the user authentication step is not successful.

A data management program according to an eleventh aspect of the present invention is characterized as follows. The data management program according to the tenth aspect of the present invention comprises a common interface program that provides a common interface for transmission and reception of data between a plurality of device drivers of the electronic computer or between the application program and the device drivers and that controls a recording device-controlling device driver that directly controls the recording device and further that includes the control step. The data management program further comprises an authentication module program that communicates with the memory means to perform the user authentication.

The data management program according to the eleventh step of the present invention is further characterized as follows. The common interface program comprises a reception step where when the write step is to be executed, the write request is received by the common interface, and a step of requesting the authentication module program to perform the user authentication after receiving the write request. The authentication module program comprises the authentication step and a step of passing an authentication status, which is a result of the user authentication, to the common interface program. The control step executes a step of receiving the authentication status and the enable step or the disable step in accordance with the authentication status. If the enable step is executed, the common interface program controls the recording device-controlling device driver so as to execute the write step. If the disable step is executed, the common interface program controls the recording device-controlling device driver so as not to execute the write step.

A data management program according to a twelfth aspect of the present invention is characterized as follows. The authentication module program in the data management program according to the eleventh aspect of the present invention comprises a step of calling an authentication application program that encrypts data by using the second authentication data. The authentication application program comprises a step of reading the second authentication data through a memory means-controlling device driver that is loaded when the memory means is connected to the electronic computer and that directly controls the memory means, a step of encrypting data received from the authentication module program by using the second authentication data to generate encrypted data, and a step of passing the encrypted data to the authentication module program. The authentication module program further comprises a step of decrypting the encrypted data by using the first authentication data to generate decrypted data, and a step of verifying the decrypted data by comparing with the above-described data.

A data management program according to a thirteenth aspect of the present invention is characterized as follows. The authentication module program in the data management program according to the eleventh or twelfth aspect of the present invention comprises a step of reading the first authentication data from the electronic computer, and a step of passing first random data randomly generated for the user authentication to the authentication application program. The authentication application program comprises a step of receiving the first random data, a step of reading the second authentication data from the memory means, a first encrypting step of encrypting the first random data by using the second authentication data to generate first encrypted data, and a step of passing the first encrypted data to the authentication module program.

The authentication module program further comprises a step of receiving the first encrypted data, a first decrypting step of decrypting the first encrypted data by using the first authentication data to generate first decrypted data, a verification step of verifying the decrypted data by comparing with the first random data, a step of passing a first authentication status, which is a result of the verification, to the common interface program if the decrypted data and the first random data do not match as a result of the verification, and a step of passing second random data randomly generated for the user authentication to the authentication application program if the decrypted data and the first random data match as a result of the verification.

The authentication application program further comprises a step of receiving the second random data, a step of reading the second authentication data from the memory means, a second encrypting step of encrypting the second random data by using the second authentication data to generate second encrypted data, and a step of passing the second encrypted data to the authentication module program. The authentication module program further comprises a step of receiving the second encrypted data, a second decrypting step of decrypting the second encrypted data by using the first authentication data to generate second decrypted data, a verification step of verifying the decrypted data by comparing with the second random data, and a step of passing a second authentication status, which is a result of the verification, to the common interface program.

The control step comprises a step of disabling the writing if the authentication status that the common interface program receives is the first authentication status, a step of enabling execution of the write step if the authentication status that the common interface program receives is the second authentication status and the second authentication status is "True", which indicates that the authentication is successful, and a step of disabling execution of the write step if the second authentication status is "False", which indicates that the authentication is not successful.

A data management program according to a fourteenth aspect of the present invention is characterized as follows. The data management program according to any one of the eleventh to thirteenth aspects of the present invention comprises a time monitoring step of monitoring whether or not a set time has elapsed from the time when execution of the write step is enabled, and a step of disabling execution of the write step if the set time has elapsed from the time when execution of the write step is enabled.

A data management program according to a fifteenth aspect of the present invention is characterized as follows. The data management program according to any one of the tenth to thirteenth aspects of the present invention comprises a step where when the write step is to be executed, the authentication step is executed after the memory means has been either connected to the electronic computer or inserted into a drive for the memory means and a specific key of an input device of the electronic computer has been pressed, and thereafter, the electronic computer is connected to a server through a network to acquire new second authentication data from a database stored in the server and having authentication data consisting essentially of the first authentication data and the second authentication data for use in the user authentication and to store the new second authentication data in the memory means. The data management program further comprises a step where a management program stored in the server to perform management of the authentication data updates and registers the authentication data used in the authentication and the new second authentication data in the database.

A data management program according to a sixteenth aspect of the present invention is characterized as follows. In the data management program according to any one of the tenth to fifteenth aspects of the present invention, when data management is performed for a plurality of electronic computers by using the memory means, a plurality of items of the first authentication data are stored in the electronic computers, respectively, and all items of the second authentication data pairing with the items of the first authentication data are stored in the memory means.

A data management program according to a seventeenth aspect of the present invention is characterized as follows. In the data management program according to any one of the tenth to sixteenth aspects of the present invention, an authentication algorithm for the user authentication is a public-key algorithm. A public key and a secret key assigned to each user are prepared in a pair. The first authentication data comprises the public key, and the second authentication data comprises the secret key.

A data management program according to an eighteenth aspect of the present invention is characterized as follows. In the data management program according to any one of the tenth to sixteenth aspects of the present invention, an authentication algorithm for the user authentication is a public-key algorithm. A public key and a secret key assigned to each user are prepared in a pair. The first authentication data comprises the secret key, and the second authentication data comprises the public key.

A data management program according to a nineteenth aspect of the present invention is characterized as follows. In the data management program according to any one of the tenth to sixteenth aspects of the present invention, the memory means comprises a removable disk and a removable disk device that writes and reads the electronic data to and from the removable disk.

A data management program according to a twentieth aspect of the present invention is characterized as follows. In the data management program according to any one of the tenth to sixteenth aspects of the present invention, the memory means comprises a flash memory, or a random access memory card.

A data management program according to a twenty-first aspect of the present invention is characterized as follows. In the data management program according to any one of the tenth to sixteenth aspects of the present invention, the memory means is a USB (Universal Serial Bus) memory, or a flexible disk.

A data management program recording medium according to a twenty-second aspect of the present invention has recorded thereon the data management program according to any one of the tenth to twenty-first aspects of the present invention.

Preferably, the authentication application program is stored in the electronic computer. Preferably, the authentication application program is stored in the memory means and called from the authentication module program or the operating system to run on the electronic computer. Preferably, the authentication application program is stored in the memory means and automatically starts to run on the electronic computer when the memory means is connected to the computer.

Preferably, the removable disk is any of portable external storage media such as an MO, Zip, CD-R, PD and DVD, and the removable disk device is a device for use with these external storage media.
Preferably, the memory means is a random access memory card such as Memory Stick (registered trademark) or Compact Flash (registered trademark).

### Advantageous Effects of the Invention:

The present invention offers the following advantageous effects.
The present invention controls a recording operation of recording electronic data such as user data or a program to an electronic recording medium with a recording device connected to an electronic computer, thereby making it possible to prevent unauthorized leakage to the outside of the electronic data stored in the electronic computer.

The present invention performs user authentication when electronic data such as user data or a program is to be recorded to an electronic recording medium with a recording device connected to an electronic computer, thereby allowing an authorized user to take out the electronic data.

### Best Mode for Carrying Out the Invention:

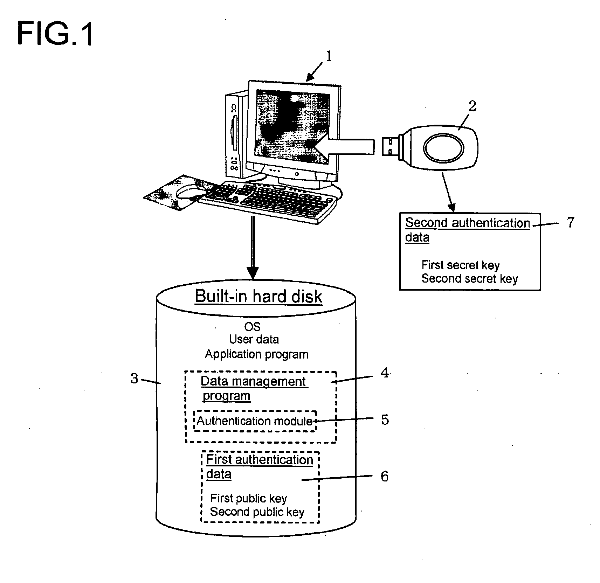

Fig. 1 is a functional block diagram showing an outline of a data management system for carrying out the present invention. Fig. 1 shows an outline of a data management system comprising an electronic computer 1 and an authentication memory device 2. The computer 1 has a computer body and input/output devices such as a display, a keyboard and a mouse. The computer 1 incorporates a built-in hard disk 3. The built-in hard disk 3 has stored therein an operating system (OS) for driving and operating the computer 1.

The built-in hard disk 3 further contains user data including data and files of a user using the computer 1, and various application programs. Further, the built-in hard disk 3 contains a data management program 4 and first authentication data 6. The computer 1 is equipped with a CD-RW drive and an FDD. The computer 1 may be further equipped with a DVD drive, an external MO drive, and an external hard disk. The computer 1 has USB ports for connection with a USB memory, etc.

The computer 1 has various data communication ports, including a plurality of USB ports, a serial port, and a parallel port. External recording devices can be connected to these ports. In the following description, the OS is Windows (registered trademark) XP (registered trademark), by way of example. Let us explain how the OS controls the operation of recording user data or files to a recording device. The built-in hard disk 3 has stored therein the OS and the device drivers of devices connected to the computer 1.

The OS of the computer 1 recognizes a plurality of recording devices connected to the computer 1, such as a CD drive, an FDD, and a USB memory, as drives separate from each other. Let us show a general example below. The OS of the computer 1 recognizes the flexible disk drive (registered trademark) as A drive, and the built-in hard disk as C drive. If a single CD device is built in the computer 1, the OS recognizes it as D drive. Examples of CD devices include those which read from media such as a CD-ROM, CD-RW, DVD-ROM and DVD-RW and write to these media. If USB devices are connected to the USB ports, the devices are recognized as E drive, F drive, and so forth in the order in which they are connected.

On the computer 1, the data management program 4 is running to control each drive of the computer 1. More accurately speaking, the data management program 4 is running to control the device drivers of the devices connected to the computer 1. The device drivers of the recording devices are also controlled by the data management program 4. Hereinafter, the data management program 4 will be referred to as having "control mode" when controlling recording to the recording devices.

When the data management program 4 controls recording to the recording devices so that recording to them is disabled, the control mode will be referred to as being "effective". When the data management program 4 controls recording to the recording devices so that recording to them is enabled, the control mode will be referred to as being "ineffective". The data management program 4 has the function of providing a common interface between the device drivers and between the device drivers and the application programs.

The data management program 4 further has the function of authenticating the recording devices connected to the computer 1. The authentication of the recording device is performed by an authentication module 5, which is a part of the data management program 4. The authentication module 5 is a program for authenticating the recording devices by using the first authentication data 6. The data management program 4 and the first authentication data 6 are stored in the built-in hard disk 3 of the computer 1. The data management program 4 is started to run after the OS has started.

The data management program 4 is distributed in an electronic recording medium such as a CD-ROM. The data management program 4 and the authentication memory device 2 are distributed together in one set. The data management program 4 is installed in the computer 1 by a user. When it has been installed, the data management program 4 is initialized.

In the initialization, it is set whether or not to enable writing of user data to a particular drive of the computer 1. For example, it is set so that user data cannot be written to any recording devices other than the built-in hard disk 3 of the computer 1. This setting prevents user data from leaking outside of the computer 1. Thus, unauthorized leakage of user data is prevented, and it becomes possible to manage the user data.

When writing to a recording device is to be performed from the OS or an application program, the data management program 4 can restrict the writing. For example, it is assumed that, in the initialization, writing to any drive other than the C drive, which is the built-in hard disk 3, is disabled. The data management program 4 has the function of monitoring writing to each drive at all times and also monitoring the operating conditions of the recording devices connected to the computer 1 and leaving a history of these monitoring operations.

The authentication memory device 2 is distributed together with the data management program 4 in one set. In the first embodiment, the authentication memory device 2 is a USB memory that is used being connected to a USB port of the computer. It should be noted, however, that the authentication memory device 2 may be any of removable disks such as an MO, Zip, CD-R, PD, and DVD, a flexible disk, a flash memory, and a memory card.

The authentication memory device 2 may also be Memory Stick (registered trademark), Compact Flash (registered trademark), or other similar memory device. The authentication memory device 2 contains second authentication data 7. The second authentication data 7 is used by the data management program 4 to authenticate the authentication memory device 2 when connected to the computer 1, thereby canceling the control of disabling writing to the recording devices. The first authentication data is distributed to the user in a recording medium such as a flexible disk.

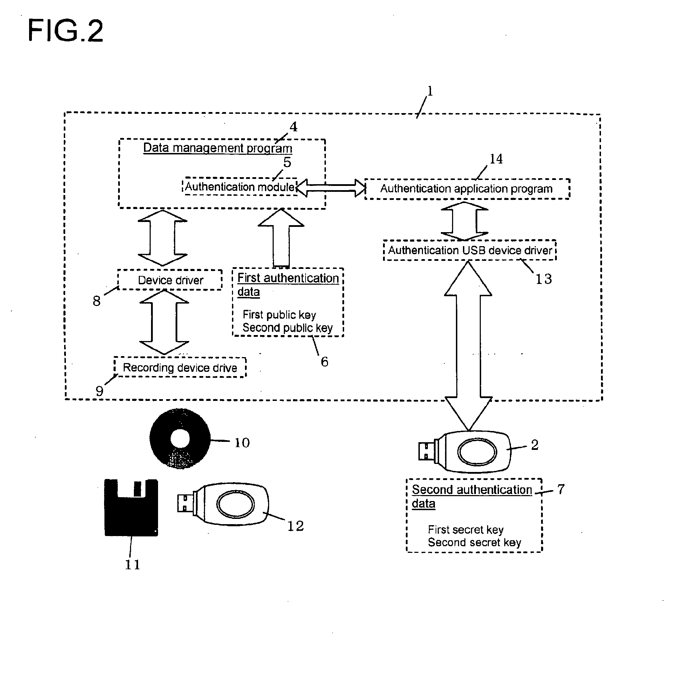

Fig. 2 shows an outline of the flow of authentication processing using the data management program 4 and the authentication memory device 2. An authentication application program 14 for performing authentication processing using data in the authentication memory device 2 is stored in the built-in hard disk 3, together with an authentication USB device driver 13 associated with the authentication memory device 2. The authentication application program 14 is installed in the computer 1 and enabled when the authentication USB device driver 13 is installed in the computer 1.

Alternatively, the authentication application program 14 may be arranged to run singly when called from the authentication USB device driver 13. Authentication processing is performed as follows. When the authentication memory device 2 is inserted into a USB port of the computer 1, the authentication USB device driver 13 is loaded from the built-in hard disk 3. Then, the authentication application program 14 runs to perform authentication processing in association with the authentication memory device 2. The authentication USB device driver 13 reads the second authentication data 7 stored in the authentication memory device 2 and passes it to the authentication application program 14.

The data management program 4 has the function of controlling a recording device drive 9 through a device driver 8. The control effected by the data management program 4 restricts writing of user data to electronic recording media such as a CD 10, a flexible disk 11, and a USB memory 12 to prevent leakage of electronic data from the electronic computer to the outside. The data management program 4 further has the function of reading the first authentication data 6 stored in the built-in hard disk 3 and passing it to the authentication module 5. The first authentication data 6 is used for authentication.

The authentication module 5 performs authentication of the authentication memory device 2 and authentication of the license of the user in association with the authentication application program 14. For these authentications are used the first authentication data 6 stored in the built-in hard disk 3 and the second authentication data 7 stored in the authentication memory device 2.

An outline of authentication is as follows. The authentication module 5 generates plain text data and passes it to the authentication application program 14. The plain text data may be text data consisting of randomly generated letters, numerals and symbols. The length of plain text data may vary each time it is generated. The authentication application program 14 encrypts the plain text data by using the second authentication data to generate encrypted data, and passes the encrypted data to the authentication module 5. The authentication module 5 receives the encrypted data sent from the authentication application program 14, performs decryption or other similar processing, and compares the decrypted data with the original plain text data to perform authentication.

The authentication operation performed by the data management program 4 and the authentication memory device 2 adopts RSA authentication using a hash function. The first authentication data 6 stored in the computer 1 comprises a public key. The second authentication data 7 stored in the authentication memory device 2 comprises a secret key. The secret key pairs with the public key for decrypting the encrypted data encrypted by using the secret key. Encrypted data encrypted by using a certain secret key can be decrypted only by a public key pairing with the secret key.

The data management program 4 authenticates whether or not the authentication memory device 2 is one for data management by using a first secret key and a first public key. Further, the data management program 4 authenticates the user license by using a second secret key and a second public key. The user license is provided to confirm that the user holding it is an authorized one when the data management program 4 and the authentication memory device 2 are distributed together in one set. The authentication is performed by an encrypting technique using secret and public keys. If the authentication is approved by the authentication processing executed in two stages, the data management program 4 enables writing to each drive.

The data management program 4 has the function of constantly monitoring whether or not the authentication memory device 2 is connected, and checking at regular time intervals if the authentication memory device 2 is connected. When a user is going to write user data or files to a recording medium, the data management program 4 makes a check and enables or disables writing. The data management program 4 enables writing only when the authentication memory device 2 is connected.

### [General Flow of Data Management System]

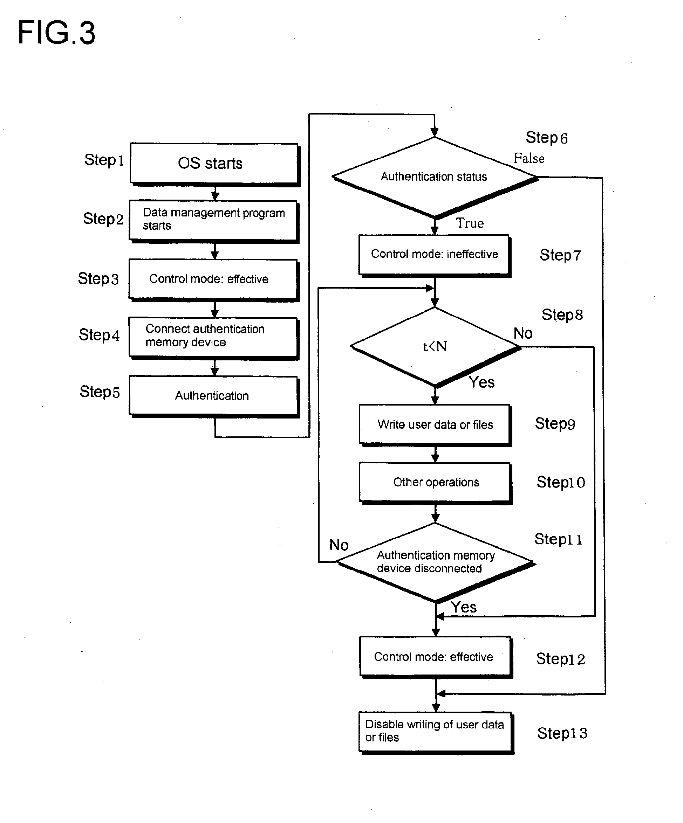

Fig. 3 is a flowchart showing the general flow of the data management system. When the power supply of the computer 1 is turned on, the OS starts (Step 1). When the OS starts, the data management program 4 starts (Step 2). When the data management program 4 starts, the control mode is initialized and made effective (Step 3). When the control mode is effective, writing of data or files to a recording device is disabled. In this case, the user can operate various application programs by using the computer 1.

When wanting to write to a recording medium, the user connects the authentication memory device 2 to the computer 1 (Step 4). When the authentication memory device 2 is connected to the computer, the authentication USB device driver 13, which is a device driver of the authentication memory device 2, is loaded from the built-in hard disk 3, and the authentication application program 14 is enabled. The authentication application program 14 is called from the authentication module 5.

When started, the authentication application program 14 generates an authentication request to read the second authentication data 7 from the authentication memory device 2 through a DLL program (not shown) and the authentication USB device driver 13, and performs processing needed for authentication described below. Then, an authentication operation is performed by the data management program 4 and the authentication memory device 2 (Step 5). The authentication module 5 judges the result of the authentication of the authentication memory device 2. If the authentication status that shows the result of the authentication operation is "False", this means that the authentication is not successful. If the authentication status is "True", this means that the authentication is successful.

If the authentication status is "False", the authentication module 5 passes the authentication status to the data management program 4 (Step 6). Because the authentication status is "False", that is, the authentication is not successful, the control mode remains effective. Accordingly, writing to the recording devices is disabled (Step 6 to Step 13). If the authentication status is found to be "True" as the result of the authentication operation, the authentication module 5 passes this authentication status to the data management program 4. Because the authentication status is "True", that is, the authentication is successful, the user can take out the desired files. At this time, the data management program 4 makes the control mode ineffective (Step 7).

The data management program 4 checks the length of time elapsed from the preceding authentication operation (Step 8). The data management program 4 does not check the elapsed time for an authentication operation performed for the first time since the user connected the authentication memory device 2. If the elapsed time t is not less than a predetermined set time N, the data management program 4 makes the control mode effective (Step 8 to Step 12). If the elapsed time t is less than the set time N, the control mode remains ineffective, and writing of files or data is performed (Step 9). Upon completion of the writing, other operations may be performed (Step 10).

If the authentication memory device 2 is not disconnected, the control mode remains ineffective, and taking out of files may be performed continuously (Step 11 to Step 8). If the authentication memory device 2 is disconnected from the computer 1, the data management program 4 immediately makes the control mode effective (Step 12). Consequently, it becomes impossible again to write user data or files to an electronic recording medium with a recording device (Step 13). Thus, only when wanting to take out the desired data, the user can do so by connecting the authentication memory device 2 to the computer 1. The use of the authentication memory device 2 prevents leakage of data to the outside that might otherwise be caused by another person impersonating the user while the user is away from the computer.

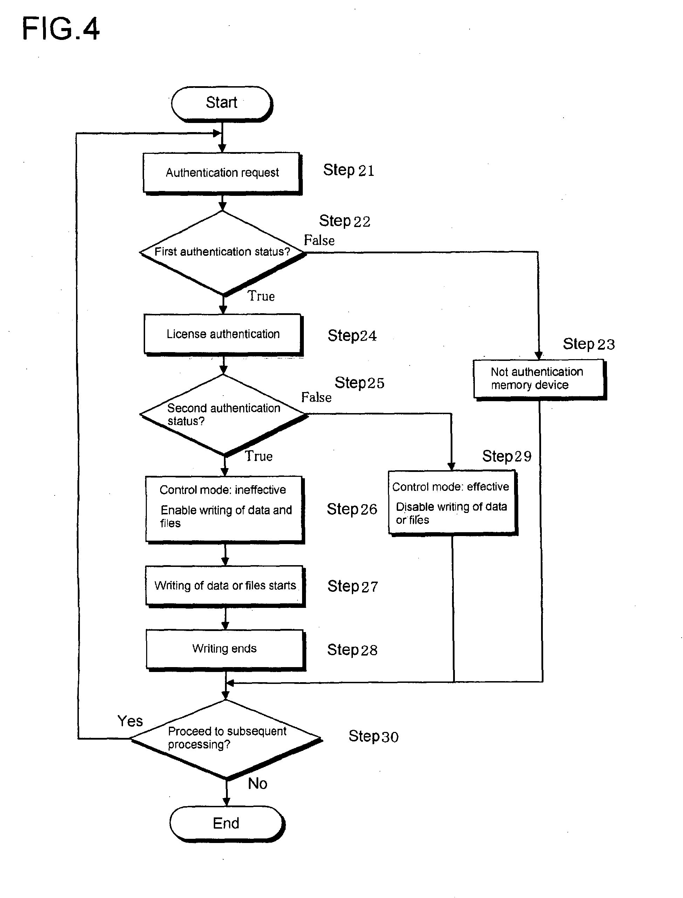

Fig. 4 shows an outline of the operation of the data management program 4. The data management program 4 performs authentication in association with the authentication memory device 2 to check whether or not the authentication memory device 2 is the one assigned to an authorized user. This authentication may be performed either at all times or at regular time intervals. The authentication is executed in two stages. In the first stage, it is checked whether or not the authentication memory device 2 is the one that is to be used in one set with the data management program 4. If the authentication memory device 2 is the one that is to be used in one set with the data management program 4, license authentication is performed to check whether or not the user using the authentication memory device 2 is an authorized one. An outline of the two-stage authentication will be explained below.

The data management program 4 includes the authentication module 5 that performs authentication in association with the authentication memory device 2. The data management program 4 transmits an authentication request to the authentication module 5 (Step 21). The authentication request is generated when the authentication memory device 2 is inserted into a USB port of the computer 1. An authentication request is also generated when an application program requests authentication. It is also possible to generate an authentication request when an application program is going to write data or files to a recording device.

On receipt of the authentication request, the authentication module 5 performs authentication. When receiving the authentication request, the authentication module 5 calls and starts the authentication application program 14 (see Fig. 2). The authentication application program 14 generates encrypted data by using data received from the authentication module 5 and the second authentication data received from the authentication memory device 2 and passes the encrypted data to the authentication module 5.

The authentication module 5 judges the authentication by using the encrypted data received from the authentication application program 14 and the first authentication data and sends a first authentication status back to the data management program 4 (Step 22). If the authentication memory device 2 is not connected to the computer 1, the authentication module 5 transmits the authentication status "False" to the data management program 4 (Step 22 to Step 23). If the authentication memory device 2 is not one that is used for authentication, the authentication module 5 also transmits the first authentication status "False" to the data management program 4 (Step 22 to Step 23).

If the first authentication status is "True", the authentication module 5 subsequently performs license authentication (Step 24). The authentication module 5 passes an authentication request to the authentication application program 14. The authentication application program 14 generates encrypted data by using the data received from the authentication module 5 and the second authentication data received from the authentication memory device 2, and passes the encrypted data to the authentication module 5.

The authentication module 5 judges the authentication by using the encrypted data received from the authentication application program 14 and the first authentication data, and sends a second authentication status back to the data management program 4 (Step 25). If the license authentication is not successful, the second authentication status "False" is transmitted (Step 25 to Step 29). At this time, the control mode is effective. If the authentication is successful, the second authentication status "True" is transmitted (Step 25 to Step 26). The data management program 4 makes the control mode ineffective to enable writing of files and data (Step 26). The user performs writing of data or files to an electronic recording medium (Steps 27 and 28). Then, the process proceeds to the subsequent processing (Step 30).

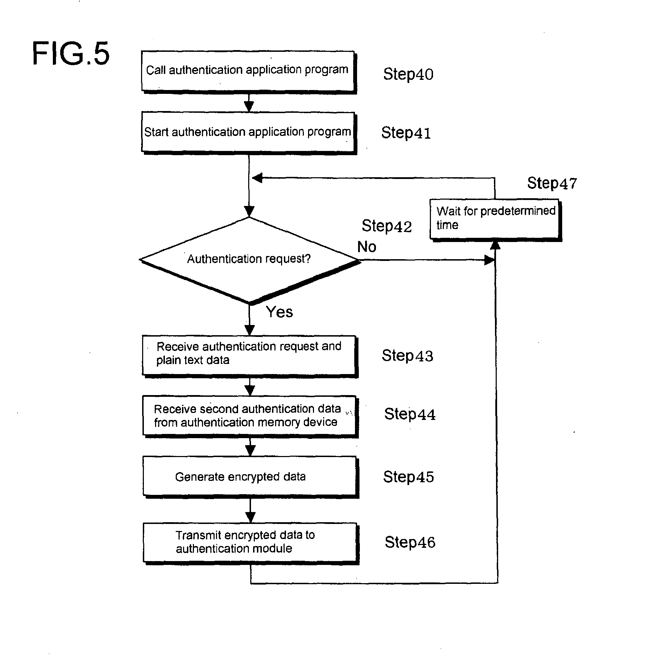

Fig. 5 shows an outline of the operation flow of the authentication application program 14. The authentication application program 14 is called to start from the authentication module 5 (Steps 40 and 41). If there is an authentication request from the authentication module 5, the authentication application program 14 receives the authentication request and plain text data from the authentication module 5 (Steps 42 and 43).

The authentication application program 14 receives the second authentication data stored in the authentication memory device 2 through the authentication USB device driver 13 (Step 44). The authentication application program 14 encrypts the plain text data by using the second authentication data to generate encrypted data (Step 45). The authentication application program 14 transmits the encrypted data to the authentication module 5 (Step 46).

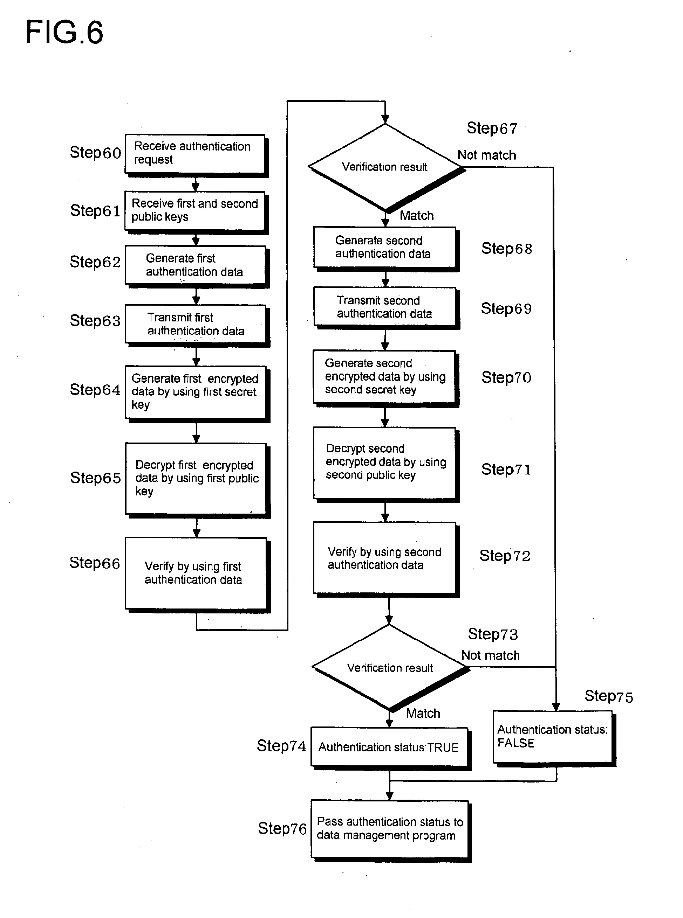

Fig. 6 is a flowchart showing an outline of the operation of the authentication module 5. The first authentication data uses two public keys, i.e. first and second public keys, to perform authentication. The second authentication data comprises first and second secret keys corresponding to the first and second public keys, respectively. The authentication module 5 receives an authentication request from the data management program 4 (Step 60). The authentication module 5 receives the first and second public keys from the data management program 4 (Step 61).

The authentication module 5 randomly generates first authentication data (Step 62). The authentication module 5 transmits the generated first authentication data to the authentication application program 14 (Step 63). The authentication application program 14 receives the first authentication data and encrypts it by using the first secret key from the authentication memory device 2 to generate first encrypted data (Step 64).

The authentication application program 14 passes the first encrypted data to the authentication module 5. The authentication module 5 decrypts the first encrypted data by using the first public key and verifies the decrypted data by comparing with the first authentication data (Steps 65 and 66). If the verification result reveals that the decrypted data and the first authentication data do not match, the authentication module 5 passes the authentication status "False" to the data management program 4 (Steps 67 and 75).

If the verification result reveals that the decrypted data and the first authentication data match, the authentication module 5 generates second authentication data randomly (Step 68). The authentication module 5 transmits the generated second authentication data to the authentication application program 14 (Step 69). The authentication application program 14 receives the second authentication data and encrypts it by using the second secret key from the authentication memory device 2 to generate second encrypted data (Step 70).

The authentication application program 14 passes the second encrypted data to the authentication module 5. The authentication module 5 decrypts the second encrypted data by using the second public key and verifies the decrypted data by comparing with the second authentication data (Steps 71 and 72). If the verification result reveals that the decrypted data and the second authentication data do not match, the authentication module 5 transmits the authentication status "False" to the data management program 4 and terminates the authentication processing (Steps 73 and 75).

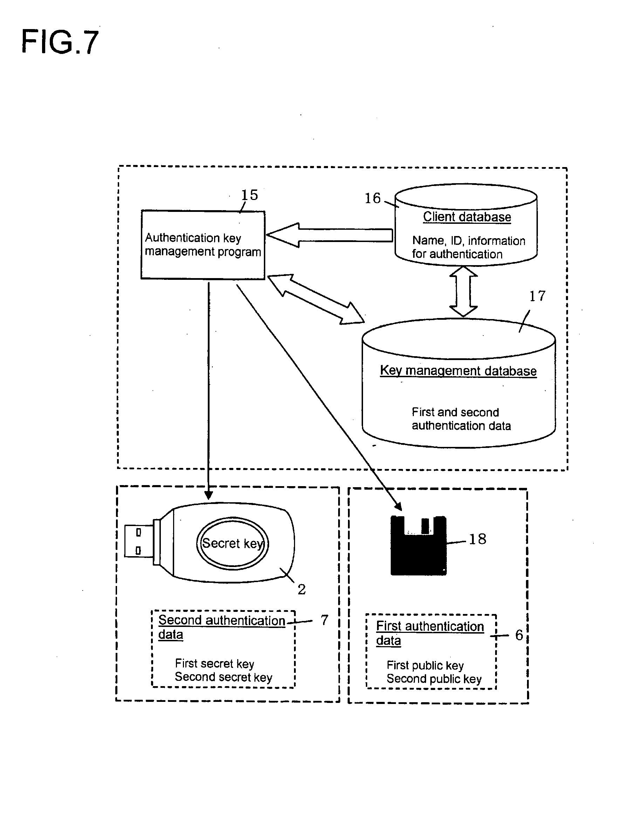

If the verification result reveals that the decrypted data and the second authentication data match, the authentication module 5 transmits the authentication status "True" to the data management program 4 and terminates the authentication processing (Steps 73 and 74). The authentication module 5 transmits the authentication status to the data management program 4 and terminates the authentication processing (Step 76). Fig. 7 shows an outline of an authentication key management program 15, a client database 16 and a key management database 17 that are used to generate and manage secret keys and public keys. The authentication key management program 15, the client database 16 and the key management database 17 are for use by the provider of the above-described data management system.

The authentication key management program 15, the client database 16 and the key management database 17 are stored in an electronic computer such as a server computer of the provider of the data management system and run in the computer. The key management database 17 has stored therein first and second authentication data used for authentication. The client database 16 is a database concerning the user and has stored therein information on the user to which the data management program 4 is distributed.

Data items registered in the client database 16 are the name of the user, the identification number of the user, information concerning authentication data, which is information on the secret and public key pair distributed to the user, and information concerning the authentication memory device 2 distributed to the user. Further, authentication data that is reissued when the authentication memory device 2 is lost, out of order, or added is updated and registered in the client database 16 and the key management database 17. The client database 16 and the key management database 17 store information including user personal information and confidential information. Therefore, it is strongly desirable to use the client database 16 and the key management database 17 in a security-rich environment.

The authentication key management program 15 generates a pair of secret and public keys by using the client database 16 and the key management database 17, and stores the generated secret key in the authentication memory device 2. The public key pairing with the secret key is output to a file as authentication data and stored in a flexible disk 18. The flexible disk 18 and the authentication memory device 2 are distributed together when the data management program 4 is distributed.

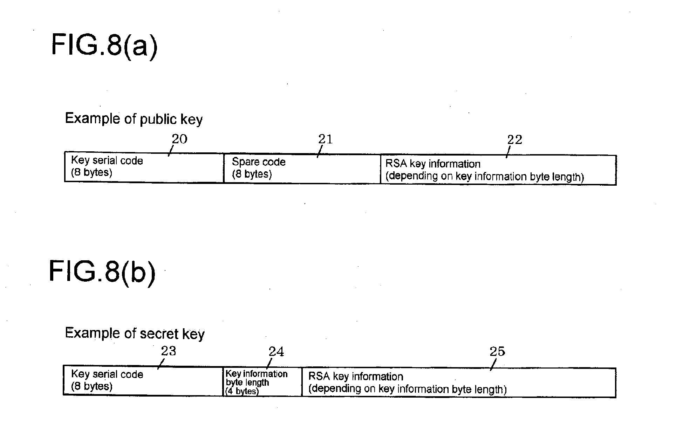

Fig. 8 shows examples of public and secret keys. Fig. 8(a) shows an example of a public key serving as the first authentication data 6. The public key consists essentially of the following parts: a key serial code 20 showing the serial code of the key; a spare code 21 provided as a backup for the system; and RSA key information 22 representing hash algorithm information and information necessary for RSA key authentication.

Fig. 8(b) shows an example of a secret key serving as the second authentication data 6. The secret key consists essentially of the following parts: a key serial code 23 showing the serial code of the key; a key information byte length 24 indicating the byte length of key information; and RSA key information 25 representing hash algorithm information and information necessary for RSA key authentication.

### [Second Embodiment]

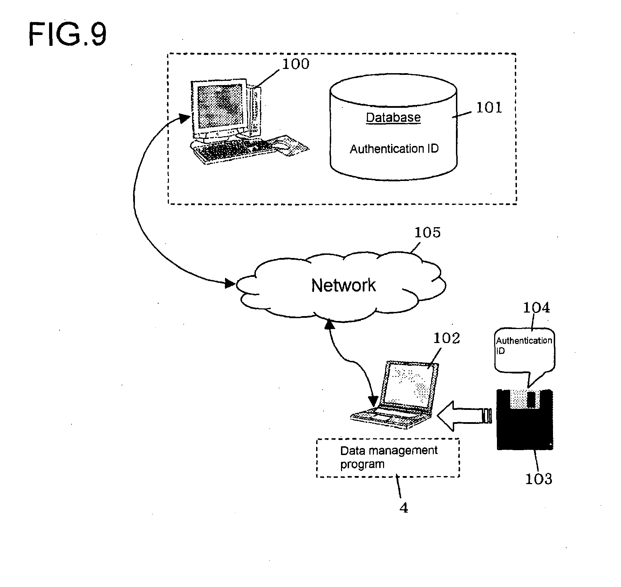

Fig. 9 shows an outline of a data management system according to a second embodiment of the present invention. The data management system according to the second embodiment of the present invention basically has similar structures and functions to those of the data management system according to the first embodiment of the present invention. In the following, let us explain only structures and functions in which the data management system according to the second embodiment differs from that of the first embodiment of the present invention. The same structures as those of the data management system according to the first embodiment of the present invention are denoted by the same reference numerals, and a description thereof is omitted herein. The data management system according to the second embodiment of the present invention uses a flexible disk 103 for authentication.

The above-described data management program 4 has been installed in an electronic computer 102. The data management program 4 is running, and the control mode is effective. When the control mode is effective, writing of data to each drive from the computer 1 is disabled. The computer 102 is connected to an authentication server 100 through a network 105. The authentication server 100 has stored therein a database 101 for managing authentication performed at the computer 102.

The user inserts a flexible disk 103 for authentication into a flexible disk drive of the computer 1 to write data to an electronic recording medium. The computer 102 is connected to the authentication server 100 through the network 105 and hence capable of transmission and reception of data to and from the authentication server 100. The authentication server 100 has stored therein a database 101 for managing authentication ID. Data stored in the database 101 includes authentication ID and information concerning the data management program 4 and the user. In the database 101, the authentication ID is registered in association with the data management program 4 or the user.

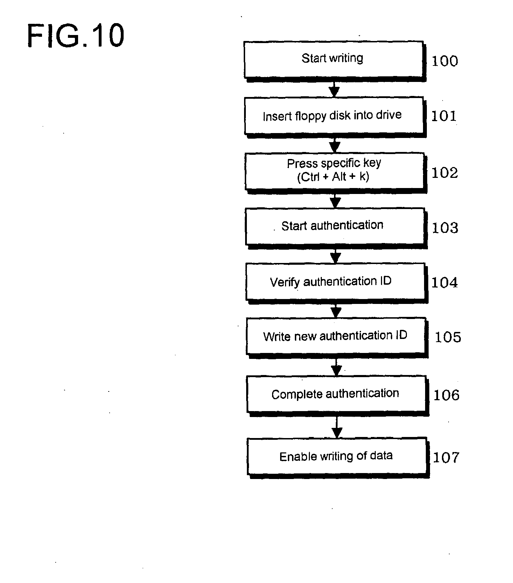

Fig. 10 is a flowchart showing recording control performed by the data management program 4 using the flexible disk 103. The user is going to write data (Step 100). The user inserts the flexible disk into the flexible disk drive (Step 101). The user presses a combination of specific keys of the keyboard of the computer 102 (Step 102). For example, the combination of specific keys is Ctr+Alt+k.

The data management program 4 starts authentication (Step 103). The flexible disk 103 has stored therein an authentication file 104 containing authentication ID. The data management program 4 reads the authentication file 104. The data management program 4 connects the computer 102 to the authentication server 100 through the network 105. The data management program 4 transmits the authentication ID to the authentication server 100 to perform verification (Step 104).

Upon completion of the verification of the authentication ID at the authentication server 100, a new authentication ID is sent from the server 100, and the data management program 4 rewrites the authentication file 104 in the flexible disk 103 with the new authentication ID (Step 105). Thus, the authentication is completed (Step 106), and the user is enabled to write data (Step 107). The data management program 4 can set such that writing of data is enabled for a predetermined period of time from the completion of authentication.

Because the authentication ID has been registered in the database 101 in association with the data management program 4 or the user, even if the flexible disk 103 is copied, the duplicate disk cannot be used with any program other than the same data management program 4.

### [Third Embodiment]

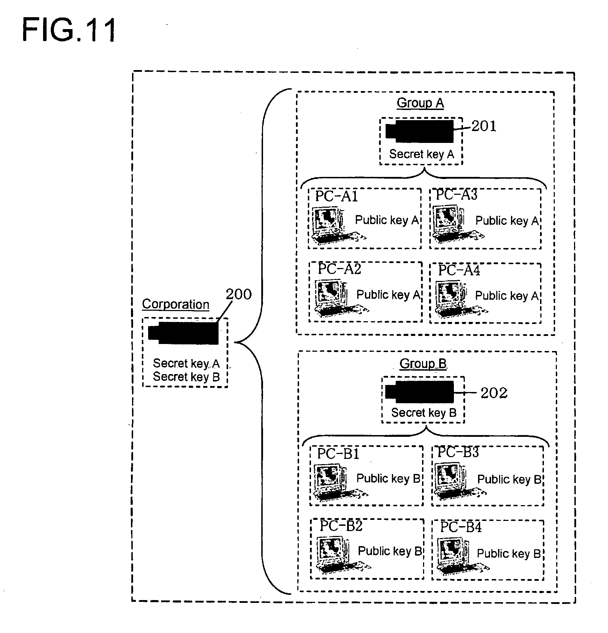

An outline of a third embodiment of the present invention will be explained. The data management system according to the third embodiment of the present invention basically has similar structures and functions to those of the data management system according to the second embodiment of the present invention. In the following, let us explain only structures and functions in which the data management system according to the third embodiment differs from that of the second embodiment of the present invention. Fig. 11 shows an outline of the third embodiment of the present invention. Fig. 11 outlines a corporation performing activities in a plurality of groups.

The corporation consists of two groups A and B, and each group has a plurality of electronic computers. The groups may be considered to be branch offices or agencies at separate locations. The groups A and B have single authentication memory devices 201 and 202, respectively. The group A has the authentication memory device 201. A secret key A for authentication has been stored in the authentication memory device 201. A public key pairing with the secret key A has been stored in all the computers PC-A1 to A4 of the group A.

Accordingly, the authentication memory device 201 can control the recording devices of all the computers PC-A1 to A4 in the group A. The group B has the authentication memory device 202. The authentication memory device 202 can control the recording devices of all the computers PC-B1 to B4 in the group B. The authentication memory device 202 cannot control the recording devices of the computers PC-A1 to A4 in the group A. There may, however, be a need to control the recording devices connected to all the computers PC-A1 to A4 and PC-B1 to B4 in both the groups A and B.

In such a case, an authentication memory device 200 is provided, and the secret keys A and B of the groups A and B are stored in the authentication memory device 200. Thus, the authentication memory device 200 can control all the computers PC-A1 to A4 and PC-B1 to B4 of the corporation.

### [Other Embodiments]

Other embodiments of the present invention will be outlined below. The authentication application program 14 (see Fig. 2) is preferably stored in the authentication memory device 2. When the authentication memory device 2 is connected to the computer 1, the authentication application program 14 starts to run automatically. The authentication application program 14 operates in the same way as in the first to third embodiments of the present invention.

In the above-described first embodiment of the present invention, as shown in Figs. 1 and 2, the first authentication data 6 stored in the computer 1 comprises a public key. The second authentication data 7 stored in the authentication memory device 2 comprises a secret key. The arrangement may be such that the first authentication data 6 stored in the computer 1 comprises a secret key, and the second authentication data 7 stored in the authentication memory device 2 comprises a public key.

Programs and so forth that are concerned with authentication, such as the authentication module 5 and the authentication application program 14, receive the secret key from the computer 1 and the public key from the authentication memory device 2 to perform authentication. The authentication key management program 15 shown in Fig. 7 generates a pair of public and secret keys, stores the public key in the authentication memory device 2, outputs the secret key to a file as authentication data, and stores it in the flexible disk 18. The flexible disk 18 and the authentication memory device 2 are distributed together when the data management program 4 is distributed. Industrial Applicability:

The present invention can be used to restrict the operation of recording user's files or data or a program stored in an electronic computer to an electronic recording medium to carry it to the outside, and preferably used in industries requiring security for electronic data. It is particularly desirable to use the present invention in printing industries and shops where it is necessary to manage confidential information, e.g. user data and files, and employee data, in business or accounting data processing. The present invention may also be used to perform electronic content delivery services, e.g. music delivery service, image delivery service, and electronic publishing, in which electronic contents are provided by specifying a recipient and writing the electronic contents to the recipient's memory. That is, the present invention may be used to restrict recording the electronic contents to an electronic recording medium for duplicating purposes.

### Brief Description of the Drawings:

[Fig. 1] Fig. 1 is a diagram showing an outline of a system configuration according to a first embodiment of the present invention.
[Fig. 2] Fig. 2 is a diagram showing an outline of a system configuration for authentication processing using a data management program 4 and an authentication memory device 2.
[Fig. 3] Fig. 3 is a flowchart showing the operation of a data management system.
[Fig. 4] Fig. 4 is a flowchart showing an outline of the operation of the data management program 4.
[Fig. 5] Fig. 5 is a flowchart showing an outline of the operation of an authentication application program 14.
[Fig. 6] Fig. 6 is a flowchart showing an outline of the operation of an authentication module 5.
[Fig. 7] Fig. 7 is a diagram showing an outline of an authentication key management program, a client database, and a key management database.
[Fig. 8] Fig. 8 is a diagram showing examples of a public key and a secret key.
[Fig. 9] Fig. 9 is a diagram showing an outline of a second embodiment in which authentication is performed by using a flexible disk.
[Fig. 10] Fig. 10 is a flowchart showing recording control in the second embodiment.
[Fig. 11] Fig. 11 is a diagram showing an outline of a third embodiment in which recording control is performed in a corporation consisting of a plurality of groups.

### Explanation of Reference Symbols:

- 1, 102 ···: electronic computer
- 2, 200, 201, 202 ···: authentication memory device
- 3 ···: built-in hard disk
- 4 ···: data management program
- 5 ···: authentication module
- 6 ···: first authentication data
- 7 ···: second authentication data
- 8 ···: device driver
- 9 ···: recording device drive
- 10 ···: CD
- 11, 18 ...: flexible disk
- 12 ...: USB memory
- 13 ...: authentication USB device driver
- 14 ···: authentication application program
- 15 ···: authentication key management program
- 16 ···: client database
- 17 ···: key management database
- 100 ···: authentication server
- 101 ···: database
- 103 ···: flexible disk
- 104 ···: authentication file
- 105 ···: network

## Claims

1. A data management method for use with an electronic computer that is connected with at least one recording device for writing to a recording medium at least one electronic data selected from the group consisting of user data and programs and that is running under control of an operating system, wherein when a user operates said electronic computer or an application program running on said electronic computer to execute writing of said electronic data to said recording medium with said recording device to duplicate or move said electronic data, said data management method controls said writing by enabling or disabling it, said data management method being **characterized in that**:
authentication of said user is performed by using first authentication data stored in said electronic computer and second authentication data stored in memory means connected to said electronic computer, and if said user authentication is successful, said writing is enabled, whereas if it is not successful, said writing is disabled by a data management program that runs on said electronic computer and that controls so that only a user authenticated by user authentication is enabled to perform said writing.

2. A data management method according to claim 1, wherein said data management program comprises:
a common interface program that provides a common interface for transmission and reception of data between a plurality of device drivers of said electronic computer or between said application program and said device drivers and that controls a recording device-controlling device driver that directly controls said recording device to enable or disable an operation for performing said writing, thereby controlling said writing; and
an authentication module program that communicates with said memory means to perform said user authentication;
wherein when said electronic computer or said application program is to execute said writing, said common interface program requests said authentication module program to perform said user authentication, and said authentication module program calls an authentication application program for performing said authentication, instructs it to perform said user authentication by using said first authentication data and said second authentication data, and passes a result of said user authentication to said common interface program, and wherein said common interface program receives said result and enables said writing if said authentication is successful, but disables said writing if said authentication is not successful.

3. A data management method according to claim 1 or 2, wherein when said electronic computer or said application program is to execute said writing, said authentication module program performs said user authentication by using said authentication data when said memory means is either connected to said electronic computer or inserted into a drive for said memory means and a specific key of an input device of said electronic computer is pressed, and thereafter, said authentication module program connects said electronic computer to a server through a network, acquires new second authentication data from a database stored in said server and having authentication data consisting essentially of said first authentication data and said second authentication data for use in said user authentication, and stores said new second authentication data in said memory means, and a management program stored in said server to perform management of said authentication data updates and registers said second authentication data used in said user authentication and said new second authentication data in said database.

4. A data management method according to any one of claims 1 to 3, wherein when data management is performed for a plurality of electronic computers by using said memory means, at least one item of said first authentication data is stored in each of said electronic computers, and all said second authentication data pairing with said first authentication data stored in each of said electronic computers is stored in said memory means.

5. A data management method according to any one of claims 2 to 4, wherein an algorithm used in said user authentication is a public-key algorithm, and a public key and a secret key assigned to each user are prepared in a pair, and wherein said first authentication data comprises said public key, and said second authentication data comprises said secret key.

6. A data management method according to any one of claims 2 to 4, wherein an algorithm used in said user authentication is a public-key algorithm, and a public key and a secret key assigned to each user are prepared in a pair, and wherein said first authentication data comprises said secret key, and said second authentication data comprises said public key.

7. A data management method according to any one of claims 2 to 4, wherein said memory means comprises a removable disk and a removable disk device for writing and reading said electronic data to and from said removable disk.

8. A data management method according to any one of claims 2 to 4, wherein said memory means comprises a flash memory, or a random access memory card.

9. A data management method according to any one of claims 1 to 4, wherein said memory means is a USB (Universal Serial Bus) memory, or a flexible disk.

10. A data management program for use with an electronic computer that is connected with at least one recording device for writing to a recording medium at least one electronic data selected from the group consisting of user data and programs and that is running under control of an operating system, wherein when a user operates said electronic computer or an application program running on said electronic computer to make a write request for writing said electronic data to said recording medium, said electronic computer is instructed to execute a write step of writing said electronic data to said recording medium with said recording device in response to said write request to thereby duplicate or move said electronic data, wherein when said write step is to be executed, said data management program instructs said electronic computer to execute a control step of controlling said write step by enabling or disabling execution of said write step,
wherein said control step comprises:
a first read step of reading first authentication data stored in said electronic computer;
a second read step of reading second authentication data stored in memory means connected to said electronic computer and having a memory area used for user authentication;
an authentication step of performing said user authentication by using said first authentication data and said second authentication data;
an enable step of enabling execution of said write step if said user authentication step is successful; and
a disable step of disabling execution of said write step if said user authentication step is not successful.

11. A data management program according to claim 10, comprising:
a common interface program that provides a common interface for transmission and reception of data between a plurality of device drivers of said electronic computer or between said application program and said device drivers and that controls a recording device-controlling device driver that directly controls said recording device and further that includes said control step; and
an authentication module program that communicates with said memory means to perform said user authentication;
said common interface program comprising a reception step where when said write step is to be executed, said write request is received by said common interface, and a step of requesting said authentication module program to perform said user authentication after receiving said write request;
said authentication module program comprising said authentication step and a step of passing an authentication status, which is a result of said user authentication, to said common interface program;
wherein said control step executes a step of receiving said authentication status and said enable step or said disable step in accordance with said authentication status;
wherein if said enable step is executed, said common interface program controls said recording device-controlling device driver so as to execute said write step, and if said disable step is executed, said common interface program controls said recording device-controlling device driver so as not to execute said write step.

12. A data management program according to claim 11, wherein said authentication module program comprises:
a step of calling an authentication application program that encrypts data by using said second authentication data;
said authentication application program comprising:
a step of reading said second authentication data through a memory means-controlling device driver that is loaded when said memory means is connected to said electronic computer and that directly controls said memory means;
a step of encrypting data received from said authentication module program by using said second authentication data to generate encrypted data; and
a step of passing said encrypted data to said authentication module program;
said authentication module program further comprising:
a step of decrypting said encrypted data by using said first authentication data to generate decrypted data; and
a step of verifying said decrypted data by comparing with said data.

13. A data management program according to claim 11 or 12, wherein said authentication module program comprises:
a step of reading said first authentication data from said electronic computer; and
a step of passing first random data randomly generated for said user authentication to said authentication application program;
said authentication application program comprising:
a step of receiving said first random data;
a step of reading said second authentication data from said memory means;
a first encrypting step of encrypting said first random data by using said second authentication data to generate first encrypted data; and
a step of passing said first encrypted data to said authentication module program;
said authentication module program further comprising:
a step of receiving said first encrypted data;
a first decrypting step of decrypting said first encrypted data by using said first authentication data to generate first decrypted data;
a verification step of verifying said decrypted data by comparing with said first random data;
a step of passing a first authentication status, which is a result of said verification, to said common interface program if said decrypted data and said first random data do not match as a result of said verification; and
a step of passing second random data randomly generated for said user authentication to said authentication application program if said decrypted data and said first random data match as a result of said verification;
said authentication application program further comprising:
a step of receiving said second random data;
a step of reading said second authentication data from said memory means;
a second encrypting step of encrypting said second random data by using said second authentication data to generate second encrypted data; and
a step of passing said second encrypted data to said authentication module program;
said authentication module program further comprising:
a step of receiving said second encrypted data;
a second decrypting step of decrypting said second encrypted data by using said first authentication data to generate second decrypted data;
a verification step of verifying said decrypted data by comparing with said second random data; and
a step of passing a second authentication status, which is a result of said verification, to said common interface program;
wherein said control step comprises:
a step of disabling said writing if said authentication status that said common interface program receives is said first authentication status;
a step of enabling execution of said write step if said authentication status that said common interface program receives is said second authentication status and said second authentication status is "True", which indicates that said authentication is successful; and
a step of disabling execution of said write step if said second authentication status is "False", which indicates that said authentication is not successful.

14. A data management program according to any one of claims 11 to 13, further comprising:
a time monitoring step of monitoring whether or not a set time has elapsed from a time when execution of said write step is enabled; and
a step of disabling execution of said write step if the set time has elapsed from a time when execution of said write step is enabled.

15. A data management program according to any one of claims 10 to 13, further comprising:
a step where when said write step is to be executed, said authentication step is executed after said memory means has been either connected to said electronic computer or inserted into a drive for said memory means and a specific key of an input device of said electronic computer has been pressed, and thereafter, said electronic computer is connected to a server through a network to acquire new second authentication data from a database stored in said server and having authentication data consisting essentially of said first authentication data and said second authentication data for use in said user authentication and to store said new second authentication data in said memory means; and
a step where a management program stored in said server to perform management of said authentication data updates and registers said authentication data used in said authentication and said new second authentication data in said database.

16. A data management program according to any one of claims 10 to 15, wherein when data management is performed for a plurality of electronic computers by using said memory means, a plurality of items of said first authentication data are stored in said electronic computers, respectively, and all items of said second authentication data pairing with said items of said first authentication data are stored in said memory means.

17. A data management program according to any one of claims 10 to 16, wherein an authentication algorithm for said user authentication is a public-key algorithm, and a public key and a secret key assigned to each user are prepared in a pair, and wherein said first authentication data comprises said public key, and said second authentication data comprises said secret key.

18. A data management program according to any one of claims 10 to 16, wherein an authentication algorithm for said user authentication is a public-key algorithm, and a public key and a secret key assigned to each user are prepared in a pair, and wherein said first authentication data comprises said secret key, and said second authentication data comprises said public key.

19. A data management program according to any one of claims 10 to 16, wherein said memory means comprises a removable disk and a removable disk device that writes and reads electronic data to and from said removable disk.

20. A data management program according to any one of claims 10 to 16, wherein said memory means comprises a flash memory, or a random access memory card.

21. A data management program according to any one of claims 10 to 16, wherein said memory means is a USB (Universal Serial Bus) memory, or a flexible disk.

22. A data management program recording medium having recorded thereon said data management program according to any one of claims 10 to 21.

## Amended claims

### Amended claims under Art. 19.1 PCT

**1.** (Canceled)

**2.** (Amended) A data management method for use with an electronic computer that is connected with at least one recording device for writing to a recording medium at least one electronic data selected from the group consisting of user data and programs and that is running under control of an operating system, wherein when a user operates said electronic computer or an application program running on said electronic computer to execute writing of said electronic data to said recording medium with said recording device to duplicate or move said electronic data, said data management method controls said writing by enabling or disabling it, said data management method being **characterized by** using a data management program that runs on said electronic computer to enable or disable said writing, said data management program comprising:
(a) a common interface program that provides a common interface for transmission and reception of data between a plurality of device drivers of said electronic computer or between said application program and said device drivers and that controls a recording device-controlling device driver that directly controls said recording device to enable or disable an operation for performing said writing, thereby controlling said writing; and
(b) an authentication module program that communicates with said memory means to perform user authentication to authenticate whether or not said user is an authorized one;
wherein when said electronic computer or said application program is to execute said writing, said common interface program requests said authentication module program to perform said user authentication, and said authentication module program calls an authentication application program for performing encryption and transmits data to said authentication application program;
wherein said authentication application program receives said data, encrypts said data by using second authentication data stored in memory means connected to said electronic computer to generate encrypted data, and transmits said encrypted data to said authentication module program;
wherein said authentication module program receives said encrypted data, decrypts said encrypted data by using first authentication data stored in said electronic computer to generate decrypted data, compares said decrypted data with said data to perform said user authentication, and passes a result of said user authentication to said common interface program; and
wherein said common interface program receives said result and enables said writing if said authentication is successful, but disables said writing if said authentication is not successful.

**3.** (Amended) A data management method according to claim 2, wherein when said electronic computer or said application program is to execute said writing, said authentication module program performs said user authentication by using below-described authentication data when said memory means is either connected to said electronic computer or inserted into a drive for said memory means and a specific key of an input device of said electronic computer is pressed, and thereafter, said authentication module program connects said electronic computer to a server through a network, acquires new said second authentication data from a database stored in said server and having authentication data consisting essentially of said first authentication data and said second authentication data for use in said user authentication, and stores said new second authentication data in said memory means, and a management program stored in said server to perform management of said authentication data updates and registers said second authentication data used in said user authentication and said new second authentication data in said database.

**4.** (Amended) A data management method according to claim 2 or 3, wherein when data management is performed for a plurality of electronic computers by using said memory means, at least one item of said first authentication data is stored in each of said electronic computers, and all of said second authentication data pairing with said first authentication data stored in each of said electronic computers is stored in said memory means.

**5.** A data management method according to any one of claims 2 to 4, wherein an algorithm used in said user authentication is a public-key algorithm, and a public key and a secret key assigned to each user are prepared in a pair, and wherein said first authentication data comprises said public key, and said second authentication data comprises said secret key.

**6.** A data management method according to any one of claims 2 to 4, wherein an algorithm used in said user authentication is a public-key algorithm, and a public key and a secret key assigned to each user are prepared in a pair, and wherein said first authentication data comprises said secret key, and said second authentication data comprises said public key.

**7.** A data management method according to any one of claims 2 to 4, wherein said memory means comprises a removable disk and a removable disk device for writing and reading said electronic data to and from said removable disk.

**8.** A data management method according to any one of claims 2 to 4, wherein said memory means comprises a flash memory, or a random access memory card.

**9.** (Amended) A data management method according to any one of claims 2 to 4, wherein said memory means is a USB (Universal Serial Bus) memory, or a flexible disk.

**10.** (Canceled)

**11.** (Canceled)

**12.** (Amended) A data management program for use with an electronic computer that is connected with at least one recording device for writing to a recording medium at least one electronic data selected from the group consisting of user data and programs and that is running under control of an operating system, wherein when a user operates said electronic computer or an application program running on said electronic computer to make a write request for writing said electronic data to said recording medium, said electronic computer is instructed to execute a write step of writing said electronic data to said recording medium with said recording device in response to said write request to thereby duplicate or move said electronic data, wherein when said write step is to be executed, said data management program instructs said electronic computer to execute a control step of controlling said write step by enabling or disabling execution of said write step, said data management program comprising:
(a) a common interface program that provides a common interface for transmission and reception of data between a plurality of device drivers of said electronic computer or between said application program and said device drivers and that controls a recording device-controlling device driver that directly controls said recording device and further that includes said control step; and
(b) an authentication module program that communicates with memory means connected to said electronic computer and having a memory area used for user authentication to perform said user authentication to authenticate whether or not said user is an authorized one;
said common interface program comprising:
(i) a reception step where when said write step is to be executed, said write request is received by said common interface;
(ii) a first read step of reading first authentication data stored in said electronic computer;
(iii) a second read step of reading second authentication data stored in said memory means;
(iv) a step of requesting said authentication module program to perform said user authentication after receiving said write request; and
(v) said control step including an enable step of enabling execution of said write step if said user authentication is successful, and a disable step of disabling execution of said write step if said user authentication is not successful;
said authentication module program comprising:
(i) an authentication step of performing said user authentication by using said first authentication data and said second authentication data;
(ii) a step of passing an authentication status, which is a result of said user authentication, to said common interface program;
(iii) a step of calling an authentication application program that encrypts data by using said second authentication data to generate encrypted data;
(iv) a step of transmitting said data to said authentication application program;
(v) a step of decrypting said encrypted data by using said first authentication data to generate decrypted data; and
(vi) a step of verifying said decrypted data by comparing with said data.
said authentication application program comprising:
(i)a step of reading said second authentication data through a memory means-controlling device driver that is loaded when said memory means is connected to said electronic computer and that directly controls said memory means;
(ii) a step of encrypting said data received from said authentication module program by using said second authentication data to generate said encrypted data; and
(iii) a step of passing said encrypted data to said authentication module program;
wherein said control step executes a step of receiving said authentication status and said enable step or said disable step in accordance with said authentication status;
wherein if said enable step is executed, said common interface program controls said recording device-controlling device driver so as to execute said write step, and if said disable step is executed, said common interface program controls said recording device-controlling device driver so as not to execute said write step.

**13.** A data management program according to claim 12, wherein said authentication module program comprises:
a step of reading said first authentication data from said electronic computer; and
a step of passing first random data randomly generated for said user authentication to said authentication application program;
said authentication application program comprising:
a step of receiving said first random data;
a step of reading said second authentication data from said memory means;
a first encrypting step of encrypting said first random data by using said second authentication data to generate first encrypted data; and
a step of passing said first encrypted data to said authentication module program;
said authentication module program further comprising:
a step of receiving said first encrypted data;
a first decrypting step of decrypting said first encrypted data by using said first authentication data to generate first decrypted data;
a verification step of verifying said decrypted data by comparing with said first random data;
a step of passing a first authentication status, which is a result of said verification, to said common interface program if said decrypted data and said first random data do not match as a result of said verification; and
a step of passing second random data randomly generated for said user authentication to said authentication application program if said decrypted data and said first random data match as a result of said verification;
said authentication application program further comprising:
a step of receiving said second random data;
a step of reading said second authentication data from said memory means;
a second encrypting step of encrypting said second random data by using said second authentication data to generate second encrypted data; and
a step of passing said second encrypted data to said authentication module program;
said authentication module program further comprising:
a step of receiving said second encrypted data;
a second decrypting step of decrypting said second encrypted data by using said first authentication data to generate second decrypted data;
a verification step of verifying said decrypted data by comparing with said second random data; and
a step of passing a second authentication status, which is a result of said verification, to said common interface program;
wherein said control step comprises:
a step of disabling said writing if said authentication status that said common interface program receives is said first authentication status;
a step of enabling execution of said write step if said authentication status that said common interface program receives is said second authentication status and said second authentication status is "True", which indicates that said authentication is successful; and
a step of disabling execution of said write step if said second authentication status is "False", which indicates that said authentication is not successful.

**14.** (Amended) A data management program according to claim 12 or 13, further comprising:
a time monitoring step of monitoring whether or not a set time has elapsed from a time when execution of said write step is enabled; and
a step of disabling execution of said write step if the set time has elapsed from a time when execution of said write step is enabled.

**15.** (Amended) A data management program according to claim 12 or 13, further comprising:
a step where when said write step is to be executed, said authentication step is executed after said memory means has been either connected to said electronic computer or inserted into a drive for said memory means and a specific key of an input device of said electronic computer has been pressed, and thereafter, said electronic computer is connected to a server through a network to acquire new said second authentication data from a database stored in said server and having authentication data consisting essentially of said first authentication data and said second authentication data for use in said user authentication and to store said new second authentication data in said memory means; and
a step where a management program stored in said server to perform management of said authentication data updates and registers said authentication data used in said authentication and said new second authentication data in said database.

**16.** (Amended) A data management program according to any one of claims 12 to 15, wherein when data management is performed for a plurality of electronic computers by using said memory means, a plurality of items of said first authentication data are stored in said electronic computers, respectively, and all items of said second authentication data pairing with said items of said first authentication data are stored in said memory means.

**17.** (Amended) A data management program according to any one of claims 12 to 16, wherein an authentication algorithm for said user authentication is a public-key algorithm, and a public key and a secret key assigned to each user are prepared in a pair, and wherein said first authentication data comprises said public key, and said second authentication data comprises said secret key.

**18.** (Amended) A data management program according to any one of claims 12 to 16, wherein an authentication algorithm for said user authentication is a public-key algorithm, and a public key and a secret key assigned to each user are prepared in a pair, and wherein said first authentication data comprises said secret key, and said second authentication data comprises said public key.

**19.** (Amended) A data management program according to any one of claims 12 to 16, wherein said memory means comprises a removable disk and a removable disk device that writes and reads electronic data to and from said removable disk.

**20.** (Amended) A data management program according to any one of claims 12 to 16, wherein said memory means comprises a flash memory, or a random access memory card.

**21.** (Amended) A data management program according to any one of claims 12 to 16, wherein said memory means is a USB (Universal Serial Bus) memory, or a flexible disk.

**22.** (Amended) A data management program recording medium having recorded thereon said data management program according to any one of claims 12 to 21.

Statement under Art. 19.1 PCT
**1.**
 Claims 1, 10 and 11 have been canceled.
 Claim 2 has been amended by combining the subject matter of canceled claim 1 and old claim 2.
 In claim 3, "below-described" has been inserted to clarify "authentication data", and the cited claims have been rearranged in accordance with the cancellation of claim 1.
 In claims 4 and 9, the cited claims have been rearranged in accordance with the cancellation of claim 1.
 Claim 12 has been amended by combining the subject matter of canceled claims 10 and 11 and old claim 12.
 In claims 13 to 22, the cited claims have been rearranged in accordance with the cancellation of claims 10 and 11.

**2.** Grounds for amendment
 Claim 2 has been amended by combining the subject matter of canceled claim 1 and old claim 2. The amendment is based on the following grounds.
 In the phrase "runs on said electronic computer to enable or disable said writing", the amendment has been made to change the expression based on old claim 1.
 The amendment to the effect that "to authenticate whether or not said user is an authorized one" is based on the statements in the specification that "the authentication module 5 performs authentication of the authentication memory device 2 and authentication of the license of the user in association with the authentication application program 14 ([0059])" and that "the data management program 4 performs authentication in association with the authentication memory device 2 to check whether or not the authentication memory device 2 is the one assigned to an authorized user ([0070])", and so forth.
 The amendment to the effect that "calls an authentication application program for performing encryption and transmits data to said authentication application program" is based on the statements in the paragraphs [0060], [0072] and [0076], etc. in the specification.
 The amendment to the effect that "wherein said authentication application program receives said data, encrypts said data by using second authentication data stored in memory means connected to said electronic computer to generate encrypted data, and transmits said encrypted data to said authentication module program;" is based on the statements in the paragraphs [0059], [0060], [0072], [0076] and [0077], etc. in the specification.
 The amendment to the effect that "wherein said authentication module program receives said encrypted data, decrypts said encrypted data by using first authentication data stored in said electronic computer to generate decrypted data, compares said decrypted data with said data to perform said user authentication" is based on the statements in the paragraphs [0060] and [0073], etc. in the specification.
 Claim 12 has been amended by combining the subject matter of canceled claims 10 and 11 and old claim 12. The amendment is based on the following grounds.
 The amendment to the effect that "to authenticate whether or not said user is an authorized one" is based on the statements in the paragraphs [0059]) and [0070], etc. in the specification.
 The amendment to the effect that "(iii) a step of calling an authentication application program that encrypts data by using said second authentication data to generate encrypted data;" is based on the statements in the paragraphs [0060] and [0072], etc. in the specification.
 The amendment to the effect that "(iv) a step of transmitting said data to said authentication application program;" is based on the statements in the paragraphs [0060], [0072] and [0076], etc. in the specification.
 The amendment to the effect that "(ii) a step of encrypting said data received from said authentication module program by using said second authentication data to generate said encrypted data" has been made to clarify "data" and "encrypted data".

**3.** Differences between the cited documents and the present invention
 WO2003/073289 (SCIENCE PARK CORPORATION) enables or restricts a user's access according to access conditions when the user accesses a specific file in a file system from an input device such as a keyboard or a mouse or an application program. WO2003/073289 does not control writing to a recording device connected to an electronic computer by performing user authentication as in the invention of the present application set forth in claims 2 and 12.
 JP11-24781 (Hitachi, Ltd.) discloses a portable information processing device and an external device that have the same identification data stored therein. When the portable information processing device is used, it and the external device compare the identification data by radio communication. Whether to enable or disable the use of a specific function, a specific document, etc. of the portable information processing device is decided in accordance with the result of the comparison. JP11-24781 does not individually control writing to recording devices connected to an electronic computer as in the invention of the present application set forth in claims 2 and 12.
 JP11-24781 does not use authentication data of different values that are respectively stored in an electronic computer and memory means, like authentication data comprising a pair of a public key and a secret key (having a different value from that of the public key) in the invention of the present application set forth in claims 5, 6, 17 and 18.
